# EUROPEAN PATENT SPECIFICATION

(11) **EP 0 233 084 B1**
(45) Date of publication and mention of the grant of the patent: **01.09.1993**
(21) Application number: 87301218.1
(22) Date of filing: 12.02.1987
(51) Int. Cl.: G01F 1/58

(54) **Electromagnetic flowmeter**
Elektromagnetischer Durchflussmesser
Débitmètre électromagnétique

(30) Priority: 14.02.1986 JP 31570/86
(43) Date of publication of application: 19.08.1987
(73) Proprietor: Aichi Tokei Denki Co., Ltd., Nagoya-shi Aichi-Ken 456-91 (JP)
(72) Inventor: Murase, Nobuyasu, Mizuho-ku Nagoya (JP)
(74) Representative: Blanco White, Henry Nicholas

(56) References cited:
- EP-A- 0 069 456
- BE-A- 630 152
- DE-B- 1 036 522
- FR-A- 2 294 678
- GB-A- 1 190 045

## Description

### BACKGROUND OF THE INVENTION

The present invention relates to an electromagnetic flowmeter, and in particular, to an electromagnetic flowmeter in which efficiency of a magnetic circuit is improved thereby to enable to reduce power consumption.

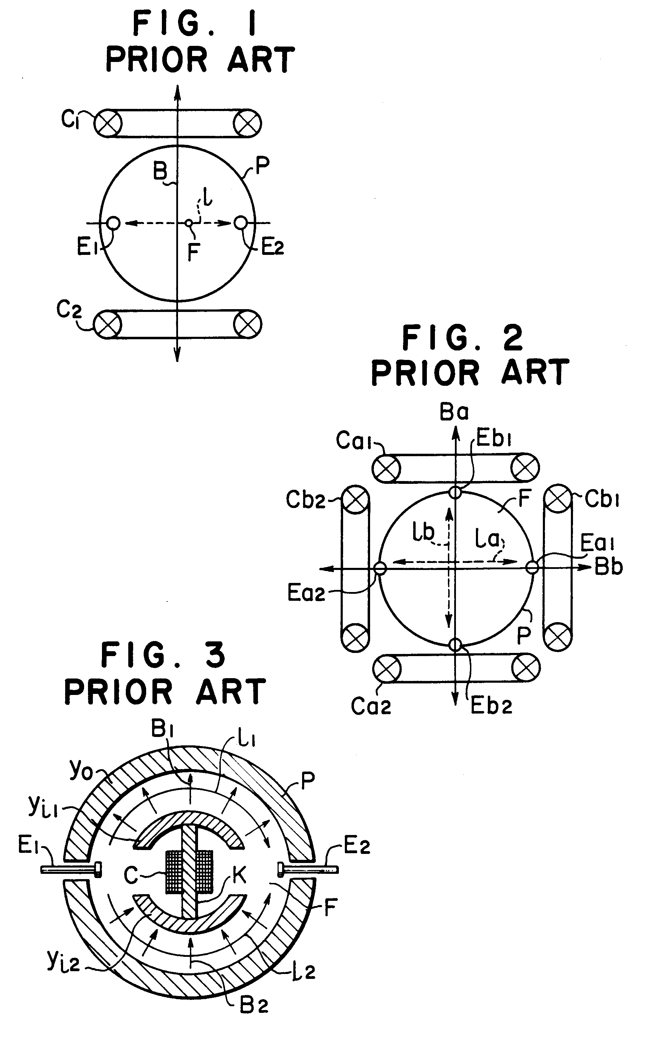

In a prior art electromagnetic flowmeter, as shown in Fig. 1, two coils C₁, C₂ are provided opposing to each other on the periphery of a pipe P having an insulated inner surface, and an alternating magnetic field B is applied to a fluid F in a diametric direction of the pipe P as shown by the arrow, and a signal voltage e proportional to the product of an intensity of the magnetic field B and a flow velocity of the fluid F is detected by electrodes E₁, E₂.

In this flowmeter, the pipe P which constitutes a flow path having a circular cross section serves as a gap of the magnetic circuit, and thus, since the magnetic reluctance is large, there is a problem in that a large exciting power is required. Furthermore, since the distribution of weight function within the pipe is not uniform, another problem is involved in that an instrumentation error is caused when the flow of the fluid F becomes irregular due to an elbow and a valve.

In order to eliminate the instrumentation error due to irregular flow, JP-A-58-87418 (1983) proposes the arrangement shown in Fig. 2 in which, in addition to a pair of coils Cₐ₁ and Cₐ₂, another pair of coils C_{b1} and C_{b2} is provided, orthogonal to the first pair. Four electrodes are provided, electrodes Eₐ₁ and Eₐ₂ being on the axes of coils C_{b1} and C_{b2} while electrodes E_{b1} and E_{b2} are on he axes of coils Cₐ₁ and Cₐ₂. The coils of each pair are wired together so that they form opposite poles, producing a field running diametrally across the conduit. The two pairs of coils are energised alternately, producing orthogonal magnetic fields Bₐ and B_{b}, and each pair of coils is energised to produce its magnetic field in both senses. Thus, orthogonal voltages lₐ and l_{b} are produced alternately, and each is produced with alternating polarity, so that the signal voltage is directed towards each of the four electrodes in turn. During each phase of the cycle only that electrode is connected to the output that will detect the instant voltage lₐ or l_{b} with the desired polarity. JP-A-58-87418 also discloses a flowmeter in which the four electrodes are positioned alternately with the four coils. The coils are energised in pairs in the same sequence as described above with reference to Fig. 2, and during each phase of the cycle the two electrodes on the same side of the magnetic field direction (that is to say, the two electrodes at a particular end of the electric field gradient) are connected to the output. In those flowmeters, because the weighting functions of the two pairs of electrodes complement each other, even when an irregular flow occurs, if a plus error is caused in one of the two pairs of electrodes, a minus error will be caused in the other pair of electrodes. Accordingly, a true flow rate of the fluid can be calculated by considering a difference between the signal voltages of both the pairs of electrodes. However, the problem of the requirement of the large exciting power still remains.

A proposal for obtaining an electromagnetic flowmeter of small power consumption by improving the efficiency of a magnetic circuit and reducing the exciting power is described in JP-A-57-200822. In this electromagnetic flowmeter, as shown in Fig. 3, when a current flows through a coil C wound about a core K made of a soft or semi-hard magnetic material, a magnetic field is produced so that the magnetic flux generated in a core K departs from an inner yoke Yi₁ and passes through a fluid F as magnetic flux B₁, and again passes through the fluid F as magnetic flux B₂ from an outer yoke Yo, and returns to the core K through an inner yoke Yᵢ₂. A signal voltage e1 is generated by the magnetic flux B₁ and a signal voltage e2 is generated by the magnetic flux B₂, and these signal voltages e1, e2 are detected by electrodes E₁, E₂.

In this electromagnetic flowmeter, small power consumption can be achieved because of a small magnetic reluctance of a magnetic gap constituting the fluid path. On the other hand, since a part of the magnetic circuit is formed within the pipe P, there are problems in that it becomes an obstruction to the flow of the fluid, it increases a pressure loss, and it hinders passage of solid materials.

An object of the present invention is to solve the aforementioned problems in the prior art and to provide an electromagnetic flowmeter in which the power consumption is small and the pressure loss is also small.

The invention provides an electromagnetic flowmeter comprising: a cylindrical conduit defining a flow path; at least four magnetic poles disposed around the periphery of the said conduit at posiions equally dividing the circumference thereof, the number of poles being even and adjacent magnetic poles having opposite polarities; and at least four electrodes, the number of electrodes being equal to the number of magnetic poles and respective electrodes being positioned at respective intermediate positions between adjacent magnetic poles, each electrode having one end in contact with a fluid in the said cylindrical conduit.

The invention also provides an electromagnetic flowmeter comprising: a cylindrical conduit defining a flow path; at least four magnetic poles disposed around the periphery of the said conduit at positions equally dividing the circumference thereof, the number of poles being even; at least four cores having one end in contact with a respective one of the said magnetic poles and extending radially outwards away from the said conduit; at least four coils a respective one of the coils being wound about each of the said cores for exciting the said cores so that adjacent poles exhibit opposite polarities to each other; an outer yoke having a ring shape connecting the other ends of said cores to form a magnetic circuit; and at least four electrodes, respective electrodes being disposed at respective intermediate positions between adjacent magnetic poles and each electrode having one end in contact with a fluid in said cylindrical conduit.

The invention further provides an electromagnetic flowmeter comprising: a cylindrical conduit defining a flow path; two sheets acting as yoke members mounted around the said cylindrical conduit at locations spaced apart in the direction of flow by a small distance; a plurality of magnetic poles formed on each of the said two sheets and extending towards the wall of the said conduit; a core mounted between the said two sheets at a location spaced from the said conduit; and a coil wound round the said core; the poles of one of said two sheets being arranged alternately with the poles of the other of the said sheets around the periphery of the said conduit in such a manner that a pole of one sheet is interposed between two poles of the other sheet to provide an array of poles of alternating polarity; and at least four electrodes, respective electrodes being disposed at respective intermediate positions between adjacent poles of the said array.

In the electromagnetic flowmeter, magnetic lines of force crossing the flow path produces a magnetic field including a magnetic gap between mutually adjacent magnetic poles. A signal voltage generated in proportion to a flow velocity of the fluid and an intensity of magnetic density is induced between adjacent electrodes and is detected by the adjacent electrodes. A length of the magnetic gap is the distance between mutually adjacent poles, and since the length of the magnetic gap is relatively small as compared with the diameter of the flow path having the circular cross section, a large magnetic flux density can be produced in the flow path with small exciting power.

Various forms of electromagnetic flowmeter according to the invention will now be described by way of example only with reference to Figs. 4 to 10 of the accompanying drawings.

In the drawings:
Figs. 1 - 3 are respectively diagrams for explaining the principles of prior art electromagnetic flowmeters.
Figs. 4 - 6 are respectively schematic sectional views illustrating embodiments of the present invention, in which Fig. 4 is the sectional view at right angles to the pipe in an embodiment including four magnetic poles; Fig. 5 is the sectional view at right angles to the pipe in another embodiment including eight magnetic poles; and Fig. 6 is the sectional view at right angles to the pipe of another embodiment.
Figs. 7 and 8 relates to still another embodiment, in which Fig. 7 is a sectional view at right angles to the pipe; and Fig. 8 is a side view.
Figs. 9 and 10 relates to still another embodiment, in which Fig. 9 is a sectional view at right angles to the pipe showing a structure of electrodes; and Fig. 10 is a side view of the structure of the electrodes.

### DESCRIPTION OF THE PREFERRED EMBODIMENTS

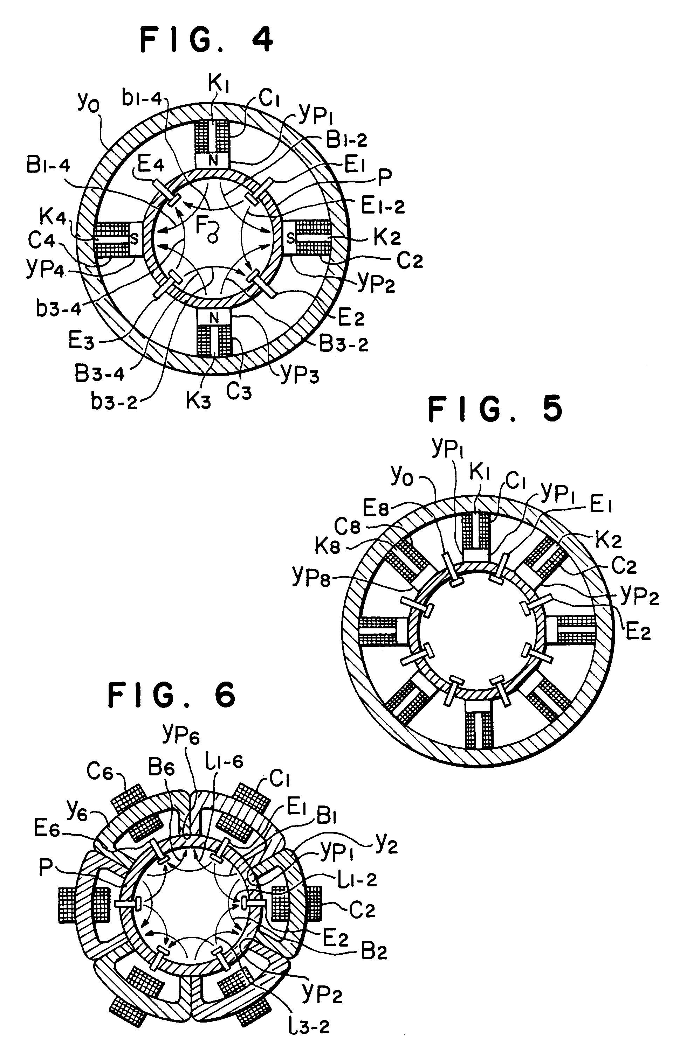

Fig. 4 shows an embodiment in which the number of magnetic poles is four. In Fig. 4, the letter P designates a pipe for forming a cylindrical fluid path, and the inner surface of the pipe P is electrically insulated. Letters Yₚ₁ - Yₚ₄ designate magnetic poles disposed on the periphery of the pipe P by equally dividing the circumference of the pipe P, and cores K₁ - K₄ having one ends respectively being in contact with the magnetic poles Yₚ₁ - Yₚ₄ and having the other ends extending radially outwardly with respect to the fluid path, and coils C₁ - C₄ respectively wound about the cores K₁ - K₄ for exciting adjacent cores in opposite polarities are provided. Letters E₁ - E₄ designate electrodes respectively disposed at intermediate points of adjacent magnetic poles Yₚ₁ - Yₚ₄, and one ends of the electrodes E₁ - E₄ are in contact with a fluid F. The cores K₁ - K₄ are made of a semi-hard or soft magnetic material. Letter Yo designates a ring-shaped outer yoke to connect the other ends of the cores K₁ - K₄ magnetic circuit. In order to excite the adjacent cores in opposite polarities, the coils of the adjacent cores may be wound in the same direction and exciting currents are supplied to flow in opposite directions, alternatively, the coils of the adjacent cores may be wound in opposite directions and the exciting currents are supplied to flow in the same direction.

Supposing that the coils C₁ - C₄ are excited so that the magnetic poles Yₚ₁ and Yₚ₃ become N poles and the magnetic poles Yₚ₂ and Yₚ₄ become S poles, magnetic lines of force departing from the magnetic pole Yₚ₁ split into two portions and flow respectively to the magnetic poles Yₚ₂ and Yₚ₄ and represented by magnetic fluxes B₁₋₂ and B₁₋₄ which cross the fluid F.

Similarly, magnetic lines of force from the magnetic pole Yₚ₃ are represented by magnetic fluxes B₃₋₂ and B₃₋₄.

Signal voltages e₁₋₂, e₁₋₄, e₃₋₁ and e₃₋₄ are generated respectively in proportion to a flow velocity of the fluid F and intensities of magnetic fluxes B₁₋₂, B₁₋₄, B₃₋₁, and B₃₋₄, and these signal voltages e₁₋₂, e₁₋₄, e₃₋₁, and e₃₋₄ are respectively detected by the electrodes E₁ - E₄.

Since the length of a magnetic gap in the fluid path corresponds to a distance between magnetic poles adjacent to each other, in the embodiment of Fig. 4, the length of the magnetic gap is equal to 1/√2̅ of the diameter of the pipe P. As a result, the magnetic reluctance in the gap is improved to 1/√2̅ as compared with the prior art techniques of Figs. 1 and 2. Thus the efficiency of the magnetic circuit is increased.

In an embodiment of Fig. 5, the number of magnetic poles, cores, coils, etc., is made twice the number in the case of Fig. 4, that is, eight, and the magnetic poles Yₚ₁ - Yₚ₈, cores K₁ - K₈, coils C₁ - C₈, and electrodes E₁ - E₈ are shown. In this embodiment, a magnetic reluctance of the magnetic gap formed in the flow path is made further smaller than that in the case of Fig. 4, and thus, the efficiency of the magnetic circuit can be improved accordingly.

An embodiment of Fig. 6 is the example in which the number of magnetic poles is six, and C-shaped yokes Y₁ - Y₆ respectively wound with coils C₁ - C₆ are arranged on the periphery of a pipe P by equally dividing the circumference of the pipe P.

End portions of the yokes Y₁ - Y₆ serve as the magnetic poles. In this embodiment, the yokes are excited so that abutting end portions of adjacent yokes function as a single unitary magnetic pole. And the excitation is such that in one C-shaped yoke, both ends respectively exhibit opposite polarities.

When the yoke Y₁ is excited by the coil C₁, magnetic flux B₁ shown by an arrow is caused, and similarly, the yoke Y₂ excited by the coil C₂ produces magnetic flux B₂.

A signal voltage e₁₋₂ produced by these magnetic fluxes is detected by electrodes E₁ and E₂. Other yokes, coils, and electrodes function similarly.

An end of the yoke Y₁ and one end of the yoke Y₂ abut against each other, and form a magnetic pole Yₚ₁. Similarly, abutting end portions of the yokes Y₂ and Y₃ form a magnetic pole Yₚ₂. A part or the whole of the yoke may be made of a semi-hard magnetic material.

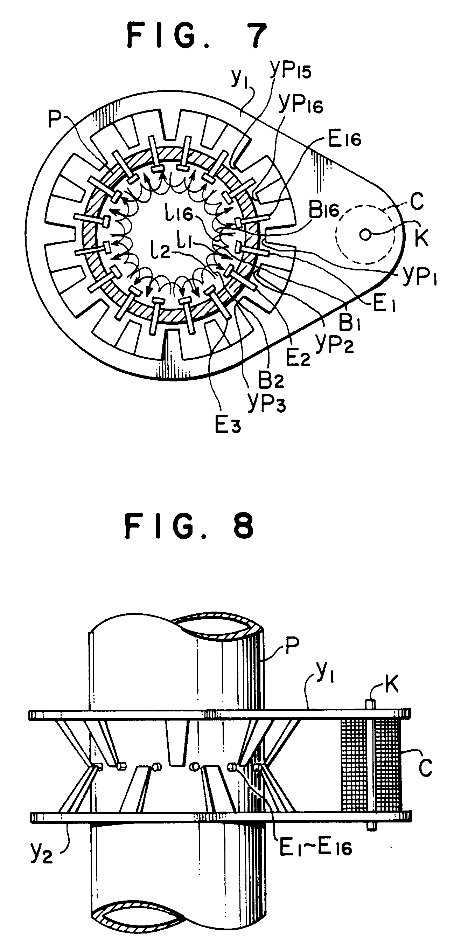

In an embodiment of Figs. 7 and 8, magnetic poles include sixteen (16) poles, and two sheets of yokes Y₁ and Y₂ each surrounding a pipe P are disposed along a direction of flow with a small interval therebetween, and a core K is inserted through holes bored in the yokes Y₁ and Y₂ at positions a small distance spaced from the pipe P. A coil C is wound about the core K so that the coil C extends over the whole interval between the two yokes Y₁, Y₂. Each of the yokes Y₁, Y₂ is provided with eight magnetic poles close to the periphery of the pipe P by equally dividing the circumference of the pipe. And each of the magnetic poles of the yoke Y₁ and each of the magnetic poles of the yoke Y₂ are arranged alternately along the circumference of the pipe P, and electrodes E₁ - E₁₆ are provided at intermediate points between adjacent ones of the 16 magnetic poles. The magnetic poles Yₚ₁, Yₚ₃, Yₚ₅, ... Yₚ₁₅ are formed by bending the yoke Y₁, and the magnetic poles Yₚ₁, Yₚ₄, Yₚ₆, ... Yₚ₁₆ are formed by bending the yoke Y₂.

In this embodiment, the eight magnetic poles Yₚ₁ - Yₚ₁₅ of the yoke Y₂ and the eight magnetic poles Yₚ₂ - Yₚ₁₆ of the yoke Y₁ are excited by one set of the core K and the coil C. And when a current flows through the coil C, magnetic fluxes B₁ - B₁₆ are produced between each magnetic pole of the yoke Y₁ and each magnetic pole of the yoke Y₂, and signal voltages e1 - e16 corresponding to a velocity of flow are obtained. These signal voltages are detected by 16 electrodes E₁ - E₁₆ provided on the pipe P. These electrodes E₁ - E₁₆ are provided on the pipe P at intermediate points between adjacent ones of the 16 magnetic poles Yₚ₁, Yₚ₂, ... Yₚ₁₆ of both the yokes Y₁ and Y₂ so that one end of each electrode protrudes into the inside of the pipe P.

In this respect, as described previously, the magnetic poles Yₚ₂, Yₚ₄, ... Yₚ₁₆ of the yoke Y₂ are formed by bending the yoke Y₂ towards the yoke Y₁, and the magnetic poles Yₚ₁, Yₚ₃, ... Yₚ₁₅ of the yoke Y₁ are formed by bending the yoke Y₁ towards the yoke Y₂. The core K may be made of a soft or a semi-hard magnetic material.

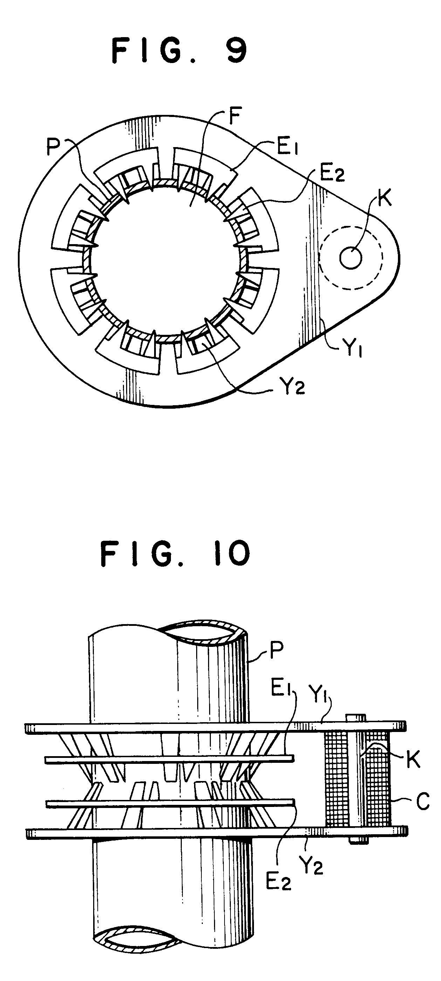

An embodiment of Figs. 9 and 10 differs from the embodiment of Figs. 7 and 8 only in the structure of electrodes. Accordingly, this difference will be described primarily. Fig. 9 shows a section at right angles to the pipe P, and each of electrodes E₁ and E₂ made of a non-magnetic conductor is of a ring shape as a whole and has 8 protrudings protruding towards the center of the ring. The protrudings are embeded in the pipe P so that the tip ends thereof are in contact with a fluid F.

The protrudings of both the electrodes E₁, E₂ are arranged alternately in a circumferential direction of the circular fluid path. The electrodes E₁, E₂ are formed by punching a plate of SUS 316 and bending the punched plate. Yokes Y₁, Y₂ are formed by working a plate of SUS 430 in a similar manner. After assembling the electrodes E₁, E₂ and the yokes Y₁, Y₂ integrally, the assembly is cast with epoxy resin or the like to fix each member at a predetermined position, and at the same time, cured epoxy resin forms the pipe P. Lastly, the coil C and the core K are attached to the yokes Y₁ and Y₂ and the assembling is completed.

In the electromagnetic flowmeter structured as described above, the magnetic reluctance between magnetic poles is decreased, and since the efficiency of the magnetic circuit is improved, the electromagnetic flowmeter of small power consumption can be realized.

Further, the electromagntic flowmeter having small pressure loss can be realized with low power consumption, since there is no disturber in the flow path.

## Claims

1. An electromagnetic flowmeter comprising: a cylindrical conduit defining a flow path (P); at least four magnetic poles (Yₚ₁ - Yₚ₄; Yₚ₁ - Yₚ₆; Yₚ₁ - Yₚ₈; Yₚ₁ - Yₚ₁₆) disposed around the periphery of the said conduit at positions equally dividing the circumference thereof, the number of poles being even and adjacent magnetic poles having opposite polarities; and at least four electrodes (E₁ - E₄; E₁ - E₆; E₁ - E₈; E₁ - E₁₆), the number of electrodes being equal to the number of magnetic poles and respective electrodes being positioned at respective intermediate positions between adjacent magnetic poles, each electrode having one end in contact with a fluid in the said cylindrical conduit.

2. An electromagnetic flowmeter according to claim 1 wherein the said electrodes are formed by two-ring-shaped plates (Figs. 9 and 10, E₁, E₂) of non-magnetic electricallyconductive material, each of the said two plates has a plurality of projections protruding towards the center of the ring, and the said projections of one of the said two plates are arranged alternately with the projections of the other of the said two plates around the periphery of the said conduit in such a manner that a projection of one plate is interposed between two projections of the other plate, and each projection forms a contact surface with the fluid to constitute a said electrode.

3. An electromagnetic flowmeter according to claim 1 wherein the said magnetic poles are formed by end portions of a predetermined number of C-shaped yokes (Fig. 6, Y₁ - Y₆) each having a coil (C₁ - C₆) would thereabout.

4. An electromagnetic flowmeter according to claim 2, which comprises two sheets of soft magnetic material acting as yoke members (Figs. 7 and 8; Y₁, Y₂; Figs. 9 and 10, Y₁, Y₂), and wherein a plurality of the said magnetic poles are formed on each of the said sheets.

5. An electromagnetic flowmeter according to claim 2, which comprises two sheets acting as yoke members (Figs. 7 and 8, Y₁, Y₂; Figs. 9 and 10, Y₁, Y₂), wherein a plurality of the said magnetic poles are formed on each sheet and a part or the whole of each of the said sheets is made of a semi-hard magnetic material.

6. An electromagnetic flowmeter comprising: a cylindrical conduit defining a flow path (P); at least four magnetic poles (Fig. 4, Yₚ₁ - Yₚ₄; Fig. 5, Yₚ₁ - Yₚ₈) disposed around the periphery of the said conduit at positions equally dividing the circumference thereof, the number of poles being even; at least four cores (Fig. 4, K₁ - K₄; Fig. 5, K₁ - K₈) having one end in contact with a respective one of the said magnetic poles and extending radially outwards away from the said conduit; at least four coils (Fig. 4, C₁ - C₄; Fig. 5, C₁ - C₈) a respective one of the coils being wound about each of the said cores for exciting the said cores so that adjacent poles exhibit opposite polarities to each other; an outer yoke (Yo) having a ring shape connecting the other ends of said cores to form a magnetic circuit; and at least four electrodes (Fig. 4, E₁ - E₄; Fig. 5, E₁ - E₈), respective electrodes being disposed at respective intermediate positions between adjacent magnetic poles and each electrode having one end in contact with a fluid in said cylindrical conduit.

7. An electromagnetic flowmeter according to claim 6 wherein said yoke and said cores are made of a soft magnetic material.

8. An electromagnetic flowmeter according to claim 6 wherein said cores are made of a semi-hard magnetic material.

9. An electromagnetic flowmeter comprising: a cylindrical conduit defining a flow path (P); two sheets acting as yoke members (Figs. 7 and 8, Y₁, Y₂) mounted around the said cylindrical conduit at locations spaced apart in the direction of flow by a small distance; a plurality of magnetic poles (Yₚ₁ - Yₚ₁₆) formed on each of the said two sheets and extending towards the wall of the said conduit; a core (K) mounted between the said two sheets at a location spaced from the said conduit; and a coil (C) wound round the said core; the poles (Yₚ₁, Yₚ₃, ... Yₚ₁₅) of one of said two sheets being arranged alternately with the poles (Yₚ₂, ... Yₚ₁₆) of the other of the said sheets around the periphery of the said conduit in such a manner that a pole of one sheet is interposed between two poles of the other sheet to provide an array of poles of alternating polarity; and at least four electrodes (E₁, E₂, ... E₁₆), respective electrodes being disposed at respective intermediate positions between adjacent poles (Yₚ₁, Yₚ₂, Yₚ₂, Yₚ₃; ... Yₚ₁₆, Yₚ₁) of the said array.

10. An electromagnetic flowmeter according to claim 9 wherein the said two sheets acting as yoke members and the said core are made of a soft magnetic material.

11. An electromagnetic flowmeter according to claim 9 wherein the said core is made of a semi-hard magnetic material.

## Patentansprüche

1. Ein elektromagnetischer Strömungsmesser, umfassend: einen zylindrischen Kanal, der einen Strömungsweg (P) begrenzt; wenigstens vier Magnetpole (Yₚ₁ - Yₚ₄; Yₚ₁ - Yₚ₆; Yₚ₁ - Yₚ₈; Yₚ₁ - Yₚ₁₆), die um den Umfang des Kanals an Positionen angeordnet sind, welche den Umfang desselben gleichmäßig unterteilen, wobei die Anzahl der Pole gerade ist und benachbarte Magnetpole entgegengesetzte Politäten haben; und wenigstens vier Elektroden(E₁ - E₄; E₁ - E₆; E₁ - E₈; E₁ - E₁₆), wobei die Anzahl der Elektroden gleich der Anzahl der Magnetpole ist und jeweilige Elektroden an jeweiligen Zwischenpositionen zwischen benachbarten Magnetpolen positioniert sind, wobei ein Ende jeder Elektrode in Kontakt mit einem Fluid in dem zylindrischen Kanal ist.

2. Ein elektromagnetischer Strömungsmesser gemäß Anspruch 1, worin die Elektroden durch zwei ringförmige Platten (Figuren 9 und 10, E₁, E₂) aus nichtmagnetischem elektrisch leitfähigem Material ausgebildet sind, wobei jede der beiden Platten eine Mehrzahl von Vorsprüngen hat, die nach der Mitte des Rings zu vorstehen, und wobei die Vor-Sprünge von einer der beiden Platten abwechselnd mit den Vorsprüngen der anderen der beiden Platten um den Umfang des Kanals in einer solchen Art und Weise angeordnet sind, daß ein Vorsprung von einer Platte zwischen zwei Vorsprünge der anderen Platte zwischengefügt ist, und jeder Vorsprung eine Kontaktoberfläche mit dem Fluid bildet, um eine besagte Elektrode zu bilden.

3. Ein elektromagnetischer Strömungsmesser gemäß Anspruch 1, worin die Magnetpole durch Endteile von einer vorbestimmten Anzahl von C-förmigen Jochen (Fig. 6, Y₁ - Y₆) ausgebildet sind, wobei um jedes eine Spule (C₁ - C₆) herumgewickelt ist.

4. Ein elektromagnetischer Strömungsmesser gemäß Anspruch 2, welcher zwei Bleche aus weichmagnetischem Material umfaßt, die als Jochteile (Figuren 7 und 8; Y₁, Y₂; Figuren 9 und 10, Y₁, Y₂) wirken, und worin eine Mehrzahl der Magnetpole auf jedem der Bleche ausgebildet sind.

5. Ein elektromagnetischer Strömungsmesser gemäß Anspruch 2, welcher zwei Bleche umfaßt, die als Jochteile (Figuren 7 und 8, Y₁, Y₂; Figuren 9 und 10, Y₁, Y₂) wirken, worin eine Mehrzahl der Magnetpole auf jedem Blech ausgebildet sind und ein Teil oder die Gesamtheit von jedem der Bleche aus einem halbhartmagnetischen Material hergestellt ist.

6. Ein elektromagnetischer Strömungsmesser, umfassend: einen zylindrischen Kanal, der einen Strömungsweg (P) begrenzt; wenigstens vier Magnetpole (Fig. 4, Yₚ₁ - Yₚ₄; Fig. 5, Yₚ₁ - Yₚ₈), die um den Umfang des Kanals an Positionen angeordnet sind, welche den Umfang desselben gleichmäßig unterteilen, wobei die Anzahl der Pole gerade ist; wenigstens vier Kerne (Fig. 4, K₁ - K₄; Fig. 5, K₁ - K₈), die ein Ende in Kontakt mit einem jeweiligen einen der Magnetpole haben und sich von dem Kanal weg radial nach auswärts erstrecken; wenigstens vier Spulen (Fig. 4, C₁ - C₄; Fig. 5, C₁ - C₈), wobei eine jeweilige eine der Spulen um jeden der Kerne zum Erregen der Kerne so, daß benachbarte Pole entgegengesetzte Polaritäten zueinander aufweisen, gewickelt ist; ein eine Ringform habendes äußeres Joch (Yo), welches die anderen Enden der Kerne zur Ausbildung eines Magnetkreises verbindet; und wenigstens vier Elektroden (Fig. 4, E₁ - E₄; Fig. 5, E₁ - E₈), wobei jeweilige Elektroden an jeweiligen Zwischenpositionen zwischen benachbarten Magnetpolen angeordnet sind und jede Elektrode ein Ende in Kontakt mit einem Fluid in dem zylindrischen Kanal hat.

7. Ein elektromagnetischer Strömungsmesser gemäß Anspruch 6, worin das Joch und die Kerne aus einem weichmagnetischen Material hergestellt sind.

8. Ein elektromagnetischer Strömungsmesser gemäß Anspruch 6, worin die Kerne aus einem halbhartmagnetischen Material hergestellt sind.

9. Ein elektromagnetischer Strömungsmesser, umfassend: einen zylindrischen Kanal, der einen Strömungsweg (P) begrenzt; zwei als Jochteile (Figuren 7 und 8, Y₁, Y₂) wirkende Bleche, die um den zylindrischen Kanal an Orten angebracht sind, welche in der Richtung der Strömung um eine kleine Entfernung voneinander beabstandet sind; eine Mehrzahl von Magnetpolen (Yₚ₁ - Yₚ₁₆), die auf jedem der beiden Bleche ausgebildet sind und sich nach der Wand des Kanals zu erstrecken; einen Kern (K), der zwischen den beiden Blechen an einem Ort angebracht ist, welchervon dem Kanal beabstandet ist; und eine Spule (C), die um den Kern gewickelt ist; wobei die Pole (Yₚ₁, Yₚ₃, ... Yₚ₁₅) von einem der beiden Bleche abwechselnd mit den Polen (Yₚ₂, ... Yₚ₁₆) des anderen der besagten Bleche um den Umfang des Kanals in einer solchen Art und Weise angeordnet sind, daß ein Pol von einem Blech zwischen zwei Pole des anderen Blechs zwischengefügt ist, um eine Anordnung von Polen von abwechselnder Polarität vorzusehen; und wenigstens vier Elektroden (E₁, E₂, ... E₁₆), wobei jeweilige Elektroden an jeweiligen Zwischenpositionen zwischen benachbarten Polen (Yₚ₁, Yₚ₂, Yₚ₂, Yₚ₃; ... Yₚ₁₆, Yₚ₁) der Anordnung angeordnet sind.

10. Ein elektromagnetischer Strömungsmesser gemäß Anspruch 9, worin die beiden Bleche als Jochteile wirken und der Kern aus einem weichmagnetischen Material hergestellt ist.

11. Ein elektromagnetischer Strömungsmesser gemäß Anspruch 9, worin der Kern aus einem halbhartmagnetischen Material hergestellt ist.

## Revendications

1. Débitmètre électromagnétique comprenant : un conduit cylindrique définissant une voie d'écoulement (P) ; au moins quatre pôles magnétiques (Yₚ₁ - Yₚ₄ ; Yₚ₁ - Yₚ₆ ; Yₚ₁ - Yₚ₈ ; Yₚ₁ - Yₚ₁₆) disposés autour de la périphérie dudit conduit à des positions divisant en parties égales sa circonférence, le nombre de pôles étant pair et les pôles magnétiques voisins ayant des polarités opposées ; et au moins quatre électrodes (E₁ - E₄ ; E₁ - E₆ ; E₁ - E₈ ; E₁ - E₁₆), le nombre d'électrodes étant égal au nombre de pôles magnétiques et les électrodes respectives étant positionnées à des positions intermédiaires respectives entre les pôles magnétiques voisins, chaque électrode ayant une extrémité en contact avec un fluide dans ledit conduit cylindrique.

2. Débitmètre électromagnétique selon la revendication 1, dans lequel lesdites électrodes sont constituées par deux plaques de forme annulaire (Figures 9 et 10, E₁ et E₂) d'un matériau non magnétique et électriquement conducteur, chacune desdites deux plaques comporte une pluralité de parties saillantes dépassant vers le centre de l'anneau, et lesdites parties saillantes d'une desdites deux plaques sont disposées alternativement avec les parties saillantes de l'autre desdites deux plaques autour de la périphérie dudit conduit de telle manière qu'une partie saillante d'une plaque est placée entre deux parties saillantes de l'autre plaque, et chaque partie saillante forme une surface de contact avec le fluide pour constituer unedite électrode.

3. Débitmètre électromagnétique selon la revendication 1, dans lequel lesdits pôles magnétiques sont formés par des parties extrêmes d'un nombre prédéterminé d'armatures en forme de C (Figure 6, Y₁ - Y₆) comportant chacune une bobine (C₁ - C₆) enroulée autour de celle-ci.

4. Débitmètre électromagnétique selon la revendication 2, qui comprend deux feuilles d'un matériau magnétique doux servant d'éléments d'armature (Figures 7 et 8, Y₁, Y₂ ; Figures 9 et 10, Y₁, Y₂), et dans lequel une pluralité desdits pôles magnétiques est formée sur chacune desdites feuilles.

5. Débitmètre électromagnétique selon la revendication 2, qui comprend deux feuilles servant d'éléments d'armature (Figures 7 et 8, Y₁, Y₂ ; Figures 9 et 10, Y₁, Y₂), dans lequel une pluralité desdits pôles magnétiques est formée sur chaque feuille et une partie où la totalité de chacune desdits feuilles est constituée d'un matériau magnétique semi-dur.

6. Débitmètre électromagnétique comprenant : un conduit cylindrique définissant une voie d'écoulement (P) ; au moins quatre pôles magnétiques (Figure 4, Yₚ₁ - Yₚ₄ ; Figure 5, Yₚ₁ - Yₚ₈) disposés autour de la périphérie dudit conduit à des positions divisant en parties égale sa circonférence, le nombre de pôles étant pair ; au moins quatre noyaux (Figure 4, K₁ - K₄ ; Figure 5, K₁ - K₈) ayant une extrémité en contact avec un pôle respectif desdits pôles magnétiques et s'étendant radialement vers l'extérieur dudit conduit ; au moins quatre bobines (Figure 4, C₁ - C₄ ; Figure 5, C₁ - C₈), une bobine respective des bobines étant enroulée autour de chacun desdits noyaux pour exciter lesdits noyaux de telle sorte que les pôles voisins présentent des polarités opposées entre elles ; une armature extérieure (Yo) ayant une forme annulaire connectant les autres extrémités desdits noyaux pour former un circuit magnétique ; et au moins quatre électrodes (Figure 4, E₁ - E₄ ; Figure 5, E₁ - E₈), les électrodes respectives étant disposées à des positions intermédiaires respectives entre les pôles magnétiques voisins et chaque électrode ayant une extrémité en contact avec un fluide dans ledit conduit cylindrique.

7. Débitmètre électromagnétique selon la revendication 6, dans lequel ladite armature et lesdits noyaux sont constitués d'un matériau magnétique doux.

8. Débitmètre électromagnétique selon la revendication 6, dans lequel lesdits noyaux sont constitués d'un matériau magnétique semi-dur.

9. Débitmètre électromagnétique comprenant : un conduit cylindrique définissant une voie d'écoulement (P) ; deux feuilles servant d'éléments d'armature (Figures 7 et 8, Y₁, Y₂) montées autour dudit conduit cylindrique à des emplacements espacés d'une petite distance dans la direction d'écoulement ; une pluralité de pôles magnétiques (Yₚ₁ - Yₚ₁₆) formés sur chacune desdites deux feuilles et s'étendant vers la paroi dudit conduit ; un noyau (K) monté entre lesdites deux feuilles à un emplacement espacé dudit conduit ; et une bobine (C) enroulée autour dudit noyau ; les pôles (Yₚ₁, Yₚ₃,..., Yₚ₁₅) d'une desdites deux feuilles étant disposés alternativement avec les pôles (Yₚ₂,..., Yₚ₁₆) de l'autre desdites feuilles autour de la périphérie dudit conduit de telle manière qu'un pôle d'une feuille est placé entre deux pôles de l'autre feuille pour fournir un réseau de pôles de polarité alternative ; et au moins quatre électrodes (E₁, E₂,... E₁₆), les électrodes respectives étant disposées à des positions intermédiaires respectives entre les pôles voisins (Yₚ₁, Yₚ₂, Yₚ₃,..., Yₚ₁₆, Yₚ₁) dudit réseau.

10. Débitmètre électromagnétique selon la revendication 9, dans lequel lesdites deux feuilles servant d'éléments d'armature et ledit noyau sont constitués d'un matériau magnétique doux.

11. Débitmètre électromagnétique selon la revendication 9, dans lequel ledit noyau est constitué d'un matériau magnétique semi-dur.
